(19) Europäisches Patentamt
European Patent Office
Office européen des brevets

(11) EP 2 631 576 A2

(12) EUROPEAN PATENT APPLICATION

(43) Date of publication:
28.08.2013 Bulletin 2013/35

(51) Int Cl.:
*F25D 23/02* (2006.01)

(21) Application number: 13156263.9

(22) Date of filing: 22.02.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 24.02.2012 CN 201210049994

(71) Applicant: BSH Bosch und Siemens Hausgeräte
GmbH
81739 München (DE)

(72) Inventors:
• Fang, Qinglei
211000 Nanjing City (CN)
• Mu, Yong
Chuzhou City (CN)
• Zhu, Lei
210000 Nanjing (CN)

(54) **Door of Household Appliance and Refrigerator including the Door**

(57) The present invention relates to a door of a household appliance (10) and a refrigerator including the door (10), in which an electric member (12) is disposed on the door (10), and according to the recommendation of the present invention, a power supply device (11, 13) electrically connected to the electric member (12) is disposed on the door (10).

FIG. 2

EP 2 631 576 A2

**Description**

**BACKGROUND OF THE INVENTION**

**Field of Invention**

The present invention relates to a door of a household appliance, and more particularly to a door of a household appliance having an independent power supply device and a refrigerator including the door.

**Related Art**

A refrigerator is used and well known as a household appliance. A refrigerator includes a refrigerator main body and a door connected to the refrigerator main body. The door is used for closing the opening portion of the refrigerator main body and is installed on door hinge portions of upper and lower doors in a rotatable manner. For a refrigerator having a door disposed with a display screen or operation panel, a wire from inside a refrigerator main body is required to connect the door through one of the upper and lower door hinges to provide power source.

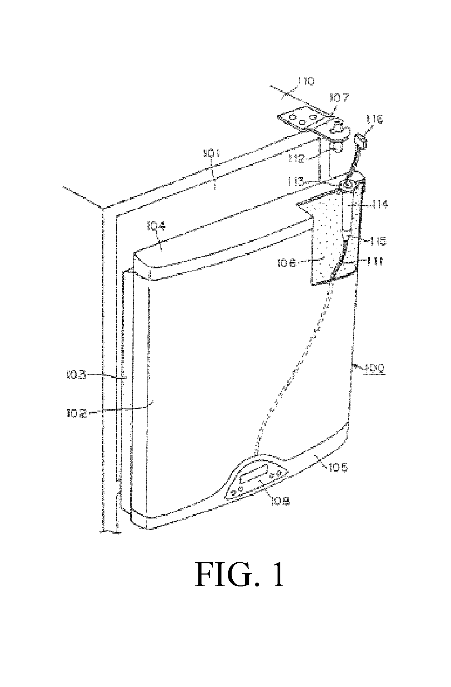

FIG. 1 is a perspective view of the wiring structure of a refrigerator door 100 in the prior art. The refrigerator door 100 is used for open and closing one storage compartment 101 of a refrigerator. The storage compartment 101 may be a refrigerator compartment or a freezer compartment. In the refrigerator door, a thermal insulation layer 106 made of rigid polyurethane is foam-formed in the space formed of a door front-face material 102, a door rear-face material 103 and upper and lower door covers 104 and 105. A display and operation panel 108 used for indicating refrigerator internal conditions such as refrigerator storage compartment temperature or used for operating the refrigerator is disposed at the surface of the door body of the refrigerator door 100, and to arrange wires from the refrigerator body 110 to the display and operation panel 108, a wire bundle 111 is guided into the door 100 through the upper-side door hinge portion 107.

To be connected to the display and operation panel 108 through the door hinge portion 107, the wire bundle 111 is required to pass through a hinge pin 112 protruding under the door hinge portion, a bolt hole 113 inserted in the hinge pin 112 and disposed on the upper-side door cover 104, a bushing 114 for protecting the wire bundle 111 and a thermal insulation layer 106 in sequence. A sealing tape 115 used for sealing the polyurethane material of the thermal insulation layer 106 is wound at the front end of the bushing 114, and a socket 116 is attached at the front end of the wire bundle 111. As being limited by the hole diameters of the hinge pin 112 and the bolt hole 113, the number of the wire bundles 111 passing through the bolt hole 113 should not be too large, and in common three-door and two-door refrigerators having a display and operation panel 108 nowadays, the display and operation panel 108 is disposed on the upper door only, and the parameter conditions of the middle door and lower door need to be sent to the display and operation panel 108 on the upper door through another wire bundle hinged between doors, and the circuit is complicated. If a display portion also needs to be disposed on the middle door and the lower door, the number of the wire bundles 111 passing through the bolt hole 113 multiplies, and even though the bolt hole 113 is capable of receiving the wire bundles, a failure occurs easily due to wire crowding.

**SUMMARY OF THE INVENTION**

The objective of the present invention is to provide a door of a household appliance and a refrigerator including the door, so as to effectively solve the problem that a failure occurs easily as a large number of wire bundles pass through a hinge in the prior art.

To implement the objectives, the present invention provides a door of a household appliance, in which an electric member is disposed on the door, and a power supply device electrically connected to the electric member is disposed on the door; by directly disposing the power supply device on the door, the supply by the power source in a main body of the household appliance is not required, and the wire bundle for supplying power to the electric member no longer needs to pass through the hinge, so that the structure of the household appliance is simplified, the probability of failure occurrence is reduced, and the reliability is increased.

Other separate features, or the features that are considered as the characteristics of the present invention in combination with other features, are illustrated in the appended claims.

Optionally, the power supply device is disposed on the door in a pluggable manner, so that the power supply device is capable of being removed at any time if necessary, for example, an external power supply device or a power supply device is aged and needs to be replaced.

Optionally, a recess is disposed on a lining of the door, and the power supply device is located in the recess, so that a user replaces the power supply device or unplugs the power supply device for recharging as demanded.

Optionally, the power supply device is disposed in an intermediate space defined between a panel and a lining of the door and is closed by one of an upper side cover and a lower side cover forming upper and lower side walls of the door; in the premise of making the power supply device pluggable for a user, no additional storage space is occupied and the power supply device is desirably concealed, thereby enhancing the visual effect of the door.

Optionally, the power supply device is a first rechargeable battery, and it is convenient and inexpensive to directly use a rechargeable battery as the power supply device.

Optionally, the power supply device includes a solar cell panel, a control conversion module, and a second rechargeable battery. The control conversion module connects the solar cell panel and the second rechargeable battery and recharges the rechargeable battery through the solar cell panel, making it more convenient for a user, which is energy conservative and environmentally friendly, and also the use of free solar energy is also economic in a long run.

Optionally, the solar cell panel covers an overlying plate of the door to absorb light energy, which not only provides an area required for placing the solar cell panel, but also enhances the appearance of the refrigerator door.

Optionally, a recess is provided on a lining of the door, and the second rechargeable battery is disposed in the recess, making it more convenient for a user to replace the power supply device as demanded.

Optionally, the second rechargeable battery is disposed in a pluggable manner in a gap between a panel and a lining of the door and is closed by an upper side cover or a lower side cover forming upper and lower side walls of the door, or is disposed in a pluggable manner on a lining of the door; in the premise of making the power supply device pluggable for a user, no additional storage space is occupied and the power supply device is desirably concealed, thereby enhancing the visual effect of the door.

Optionally, the electric member includes a display portion and an illumination portion.

Optionally, the door and a main body of the refrigerator are respectively supplied with power by different power supply devices, and by separately supplying power to the door, it is avoided that the wire bundle for supplying power passes through the hinge of the door, and the probability of failure occurrence is reduced.

To implement the above objectives, the present invention further provides a refrigerator, the refrigerator includes the door according to at least one of claims 1 to 11, in which the wire bundle for supplying power to a display portion does not pass through the hinge, so that the structure of the refrigerator is simplified and it becomes possible that a display portion is disposed on every door on, for example, a three-door refrigerator.

The structure of the present invention and other invention objects and beneficial effects will become more apparent and comprehensible through the description of the preferred embodiments with reference to the accompanying drawings.

## BRIEF DESCRIPTION OF THE DRAWINGS

To serve as a part of the specification and provide further understanding of the present invention, the accompanying drawings below are provided for illustrating the embodiments of the present invention, which are used together with the specification to illustrate the principles of the present invention.

FIG. 1 is a perspective view of the wiring structure of a refrigerator door in the prior art;

FIG. 2 is a schematic structural view of a door of a household appliance according to an embodiment of the present invention;

FIG. 3 is a schematic structural view of a door of a household appliance according to another embodiment of the present invention;

FIG. 4 is a sectional view of a first placement position of a rechargeable battery according to the present invention; and

FIG. 5 is a sectional view of a second placement position of a rechargeable battery according to the present invention.

## DETAILED DESCRIPTION OF THE INVENTION

The typical embodiments of the present invention are illustrated in detail, the examples of which are shown in the accompanying drawings, and the same drawing labels in all the accompanying drawings indicate the same elements. The embodiments are described with reference to the accompanying drawings to illustrate the present invention.

A refrigerator according to a preferred embodiment of the present invention includes: a main body, the main body is disposed with three storage compartments, a front opening of each storage compartment is opened or closed respectively by an upper door 10, a middle door 17, and a lower door 18, the upper door 10, the middle door 17, the lower door 18 are hinged to a front surface of the main body 20 in a rotatable manner, and the main body 20 and the upper door 10, the middle door 17, and the lower door 18 together form the appearance of the refrigerator. The refrigerator provides cold air through evaporators (not shown) in a refrigeration cycle, and the evaporators are respectively installed on the inner surface at the rear portion of the storage compartment, so as to store the objects in the storage compartment in a refrigerating or freezing state. The power for the evaporator, condenser, compressor, and the like in the main body is supplied by an external power source by means of the connection to the external power source with a plug.

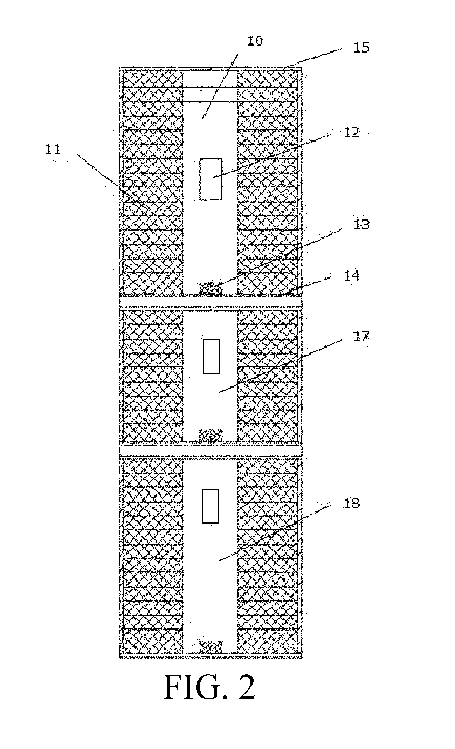

As shown in FIG. 2, in the embodiment, the upper door 10 closes a refrigerator compartment, the middle door 17 closes a soft freezing compartment, and the lower door 18 closes a freezer compartment, in which a display portion 12 is disposed on the upper door 10, and in practical operations, a control panel is usually disposed at one side of the display portion 12 of the upper door 10, and only a display portion 12 is disposed on the middle door 17 and the lower door 18. The upper door 10 includes a non-cutting-formed lining plate produced from a plastic plate, one overlying plate 22 connected to the lining plate to form the door main body and used as an outer surface layer, and an insulation layer 21 foam-formed in an intermediate space 23 defined between the lining 25 and the overlying plate 22, a display region is arranged on the surface of the overlying plate 22, the display portion 12 is disposed and is used for displaying information related to the operation of the refrigerator, for example, used for displaying the temperature and humidity data of the refrigerator collected by, for example, a temperature sensor and a humidity sensor disposed inside the refrigerator, and the display portion is preferably an LCD display.

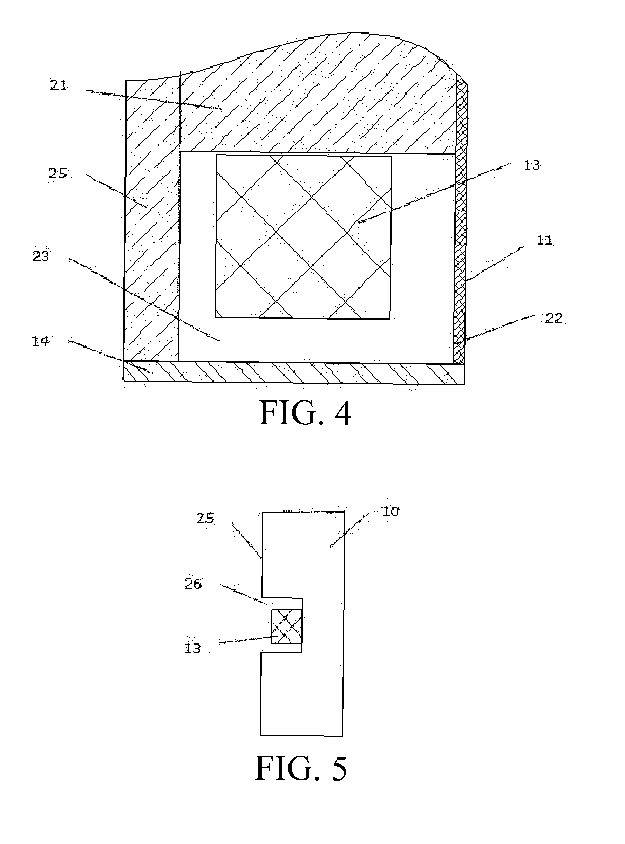

A solar cell panel 11 covers the overlying plate 22 of the refrigerator and the solar cell panel 11 includes two parts separately arranged at two sides of the display portion 12. In the embodiment, the solar cell panel 11 approximately occupies two thirds of the area of the overlying plate 22 of the refrigerator. The portion of each solar cell panel 11 is connected to a control conversion module. As shown in FIG. 4, the control conversion module and the rechargeable battery 13 are together placed in an intermediate space 23 defined between the overlying plate 22 and a lining 25 of the door, in which, for ease of plugging and unplugging of the rechargeable battery 13, the placement position is near the bottom edge of the door, and are closed by a lower side cover 14 forming the lower side wall of the door. The solar cell panel 11 absorbs the sun's light energy, and the light energy is converted into electrical energy through the control conversion module and stored in the rechargeable battery 13 for use by the display portion 12. In another manner, the rechargeable battery is placed at an upper edge near the door and is closed by an upper side cover 15 forming the upper side wall of the door. The upper side cover 15 or the lower side cover 14 can be easily removed to make it convenient to plug and unplug the rechargeable battery 13, and it can also be selected to replace an aged rechargeable battery 13 with a new battery.

In addition, an illumination device can also be disposed on the door to make it convenient for a user to fetch food or beverage placed on the door. The illumination device is preferably an LED illumination lamp, and the illumination device is also connected to the rechargeable battery 13 and supplied with power by the rechargeable battery 13. The electric member in the embodiment includes a display portion 12 and an illumination portion.

In the following, the feasibility of the embodiment is calculated and analyzed more precisely.

By taking an upper door for a refrigerator compartment that has the highest demand for electric power as an example, the power consumption involved 4 LED lamps, an LCD display and a DOM control module, in which the 4 LED lamps are used for illumination and indication, the power of each LED lamp is 0.5 w, and the total of the 4 is 2 w; the power of the LCD display is 1.5 w, the power of the DOM control module is 1 w, and the loss for the conversion and control circuit of the battery is 20% is also considered, so that the total power consumption required each day is:

$$(2 + 1 + 1.5)*24/(1 - 20\%) = 135 \text{ w}.$$

The refrigerator is placed indoors. A thin film amorphous silicon solar battery is used, and a typical 7% conversion efficiency a-Si thin film solar battery is taken as an example, the peak power of which is 10 w/m$^2$. By taking an upper door of a three-door refrigerator having a small area of a brand as an example, the area is about 0.3 m$^2$, and as the solar cell panel approximately occupies two thirds of the area of the overlying plate of the refrigerator, the area of the solar cell panel is 0.2 m$^2$. The power capable of being supplied per day is calculated with 10 hours a day for the time with illumination indoors: 100*0.2*10 = 200 w.

As can be seen from the above calculation result, the power capable of being supplied each day is large than the total power consumption each day, that is, the area of the door body of an existing refrigerator can totally meet the electric demand of the door body of a refrigerator.

The power supply device is located on the refrigerator door and separately supplies power to the refrigerator door, so as to eliminate wires connected to the main body of the refrigerator through the upper door hinge, so that the wire that passes through the hinge is only a control wire, thereby avoiding the problem that an error occurs easily due to wire crowding. As only a display portion is disposed on the middle door and the lower door and a control portion is not disposed, no wire passes through the middle door hinge and the lower door hinge.

The embodiments disclosed in the present invention further include the following three manners:

1. As shown in FIG. 5, a recess 26 is disposed on a non-cutting formed lining 25 produced from a plastic plate and is used for placing a rechargeable battery 13, the rechargeable battery 13 may be inserted in the recess 26 and connected to a display portion 12, so as to supply power to the display portion 13. When the electricity is used up, the rechargeable battery 13 may also be unplugged from the recess 26 for recharging. In this embodiment, a solar cell panel is not required. As the power required for the door each day is not high, the rechargeable battery 13 can be recharged at a relatively long interval, so that compared with the first embodiment, this embodiment saves the cost.

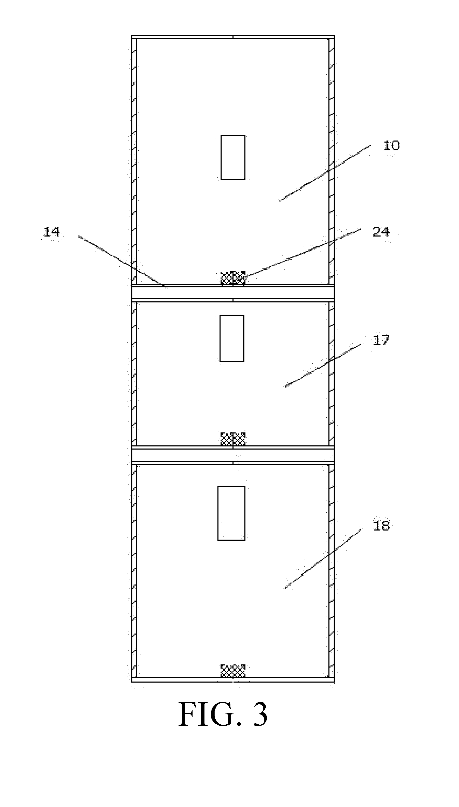

2. As shown in FIG. 3, a solar cell panel is not disposed, a rechargeable battery 13 connected to a display portion 12 is placed in a pluggable manner in an intermediate space 23 defined between an overlying plate 22 and a lining 25 of a door, in which for ease of plugging and unplugging, the placement position is near the upper edge of the door or near the lower edge of the door, and is closed by one of the upper side cover 15 and the lower side cover 14 forming the upper and lower side walls of the door, and in FIG. 3, the rechargeable battery 13 is closed by the lower side cover 14.

3. A recess 26 is formed on the lining 25 and is used for placing a pluggable rechargeable battery 24. A solar cell panel 11 covers an overlying plate 22 of a refrigerator, a control conversion module is placed at one side of the rechargeable battery 24, the solar cell panel 11 absorbs the sun's light energy, and the light energy is converted into electrical energy through the control conversion module and stored in the rechargeable battery 24 for use by the display portion 13. In the embodiment, the solar cell panel 11 on the door includes two parts separately arranged at two sides of the display portion 13, making the appearance of the refrigerator simple and elegant, and the portion of each solar cell panel is connected to the control conversion module.

## Claims

1. A door of a household appliance, wherein an electric member (12) is disposed on the door (10), **characterized in that** a power supply device (11, 13) electrically connected to the electric member (12) is disposed on the door (10).

2. The door of a household appliance according to claim 1, **characterized in that** the power supply device (13) is disposed in the door (10) in a pluggable manner.

3. The door of a household appliance according to claim 1 or 2, **characterized in that** a recess (26) is disposed in a lining (25) of the door, and the power supply device (13) is located in the recess (26).

4. The door of a household appliance according to claim 1 or 2, **characterized in that** the power supply device (13) is disposed in an intermediate space (23) defined between an overlying plate (22) and a lining (25) of the door and is closed by one of an upper side cover (15) and a lower side cover (14) forming upper and lower side walls of the door (10).

5. The door of a household appliance according to any one of claims 1 to 4, **characterized in that** the power supply device is a first rechargeable battery (24).

6. The door of a household appliance according to claim 1, **characterized in that** the power supply device comprises a solar cell panel (11), a control conversion module, and a second rechargeable battery (13), and the control conversion module connects the solar cell panel (11) and the second rechargeable battery (13).

7. The door of a household appliance according to claim 6, **characterized in that** the solar cell panel (11) covers an overlying plate (22) of the door to absorb light energy.

8. The door of a household appliance according to claim 6, **characterized in that** a recess (26) is disposed in a lining (25) of the door, and the second rechargeable battery (13) is located in the recess (26).

9. The door of a household appliance according to claim 6, **characterized in that** the second rechargeable battery (13) is disposed in a pluggable manner in an intermediate space (23) between an overlying plate (22) and a lining (25) of the door and is closed by an upper side cover (15) and a lower side cover (14) forming upper and lower side walls of the door (10), or is disposed on the lining (25) of the door in a pluggable manner.

10. The door of a household appliance according to claim 1, **characterized in that** the electric member (12) comprises a display portion and an illumination portion.

11. The door of a household appliance according to claim 1, **characterized in that** the door (10) and a main body of a refrigerator are respectively supplied with power by different power supply devices.

12. A refrigerator, **characterized in that** the refrigerator comprises at least one door according to one of claims 1 to 11.

FIG. 1

FIG. 2

FIG. 3

FIG. 4

FIG. 5